# EUROPEAN PATENT APPLICATION

(11) **EP 3 447 300 A1**
(43) Date of publication of application: **27.02.2019**
(21) Application number: 18185999.2
(22) Date of filing: 27.07.2018
(51) Int. Cl.: F04D 25/08, F04D 25/16, F04D 29/42, F04D 17/16

(54) **CENTRIFUGAL BLOWER UNIT FOR IN-VEHICLE AIR CONDITIONER**

(30) Priority: 25.08.2017 JP 2017162498
(71) Applicant: Valeo Japan Co., Ltd., Saitama 360-0193 (JP)
(72) Inventor: YOSHIZAKI, Hisayoshi, SAITAMA, 360-0193 (JP)
(74) Representative: Metz, Gaëlle

(57) **Abstract**

A centrifugal blower unit includes a first scroll, a second scroll, and a motor accommodation part in which a motor is accommodated. A cooling air intake port through which cooling air for cooling the motor is taken in is provided in the scroll to which outside air is sucked when the outside air of a vehicle is sucked to one of the first scroll and the second scroll and vehicle cabin inside air is sucked to the other of he first scroll and the second scroll. The motor accommodation part is provided with a cooling air supply port that communicates with the cooling air intake port and guides the cooling air to the motor.

## Description

### BACKGROUND OF THE INVENTION

### 1. Field of the Invention

The present invention relates to a centrifugal blower unit to be applied to a two-layer flow type in-vehicle air conditioner.

### 2. Description of the Related Art

There is a known centrifugal blower unit for a vehicle that takes in one of outside air (outside air of a vehicle) or vehicle cabin inside air and blows out the air (see, for example, Patent Literature 1). Such a centrifugal blower unit includes an impeller wheel that is rotationally driven by a motor and blows out air and a scroll that redirects the air blown out from the impeller wheel to an air passage. In addition, there is a so-called two-layer flow type centrifugal blower unit, having upper and lower air flow passages, that is to be applied to a two-layer flow type in-vehicle air conditioner, as a centrifugal blower unit for a vehicle. In this centrifugal blower unit, while outside air is taken in and blown to one air flow passage, vehicle cabin inside air can be taken in and blown to the other air flow passage at the same time. In heating operation, outside air at low humidity is taken in to one air flow passage and blown onto the front window to prevent the fogging of the front glass and warm vehicle cabin inside air is taken in to the other air flow passage and circulated, thereby the heating efficiency can be improved. In such a two-layer flow type centrifugal blower unit, a problem caused by mixture of outside air flowing through one air flow passage with vehicle cabin inside air flowing through the other air flow passage has been pointed out. Particularly, when vehicle cabin inside air at high humidity flows into an air flow passage in which outside air at low humidity flows, the effect of preventing the fogging of the front glass is reduced. Accordingly, in a two-layer flow type centrifugal blower unit, avoidance of mixture of vehicle cabin inside air with outside air is highly requested.

By the way, when an impeller wheel is rotationally driven by a motor continuously, the motor generates heat. When the motor generates heat, the temperature of internal electric wires rises and the electric resistance is increased, thereby increasing the power consumption of the motor.

Patent Literature 1 describes a technique for cooling a motor using the air flowing through a scroll. The air for cooling the motor taken in from the scroll is returned to the scroll after having cooled the motor. However, the centrifugal blower unit described in Patent Literature 1 is not a centrifugal blower unit to be applied to a two-layer flow type in-vehicle air conditioner. That is, Patent Literature 1 does not disclose a technique for cooling a motor while preventing a problem caused by mixture of vehicle cabin inside air with outside air in a two-layer flow type centrifugal blower unit.

Patent Literature 1: JP-A-2007-1541

### SUMMARY OF THE INVENTION

An object of the invention is to provide a centrifugal blower unit, applied to a two-layer flow type air conditioning device, that can cool a motor effectively while preventing a problem caused by mixture of vehicle cabin inside air with outside air while the centrifugal blower unit operates.

According to a preferred embodiment of the invention, there is provided a centrifugal blower unit for a vehicle, characterized by including, a motor; a first impeller wheel that has a plurality of blades forming a circumferential direction blade row, is rotationally driven by the motor about a rotational axis line extending in an axial direction, and blows out air present radially inward of the blade row in a centrifugal direction; a first scroll including a first impeller wheel-specific inner space in which the first impeller wheel is accommodated, a first suction port opened in the axial direction, and a first discharge port opened in a circumferential direction, a first air flow path being formed between an inner peripheral surface of the first scroll and an outer peripheral surface of the first impeller wheel; a second impeller wheel having a plurality of blades forming a circumferential direction blade row, the second impeller wheel being rotationally driven by the motor about the rotational axis line to blow out air present radially inward of the blade row in the centrifugal direction, the second impeller wheel being provided concentrically with the first impeller wheel; a second scroll including a second impeller wheel-specific inner space in which the second impeller wheel is accommodated, a second suction port opened in the axial direction, and a second discharge port opened in the circumferential direction, a second air flow path being formed between an inner peripheral surface of the second scroll and an outer peripheral surface of the second impeller wheel; and a motor accommodation part having a motor-specific inner space in which the motor is accommodated, in which, when outside air of the vehicle is sucked to one of the first scroll and the second scroll and vehicle cabin inside air is sucked to the other of the first scroll and the second scroll, a cooling air intake port that intakes cooling air which cools the motor is provided in the scroll to which the outside air is sucked, and, in which the motor accommodation part is provided with a cooling air supply port that communicates with the cooling air intake port and guides the cooling air to the motor.

According to a preferred embodiment of the invention, there is provided a centrifugal blower unit for a vehicle, characterized by including, a motor; a first impeller wheel that has a plurality of blades forming a circumferential direction blade row, is rotationally driven by the motor about a rotational axis line extending in an axial direction, and blows out air present radially inward of the blade row in a centrifugal direction; a first scroll including a first impeller wheel-specific inner space in which the first impeller wheel is accommodated, a first suction port opened in the axial direction, and a first discharge port opened in a circumferential direction, a first air flow path being formed between an inner peripheral surface of the first scroll and an outer peripheral surface of the first impeller wheel; a second impeller wheel having a plurality of blades forming a circumferential direction blade row, the second impeller wheel being rotationally driven by the motor about the rotational axis line to blow out air present radially inward of the blade row in the centrifugal direction, the second impeller wheel being provided concentrically with the first impeller wheel; a second scroll including a second impeller wheel-specific inner space in which the second impeller wheel is accommodated, a second suction port opened in the axial direction, and a second discharge port opened in the circumferential direction, a second air flow path being formed between an inner peripheral surface of the second scroll and an outer peripheral surface of the second impeller wheel; and a motor accommodation part having a motor-specific inner space in which the motor is accommodated, in which, when outside air of the vehicle is sucked to one of the first scroll and the second scroll and vehicle cabin inside air is sucked to the other of the first scroll and the second scroll, a cooling air intake port that intakes cooling air which cools the motor is provided in the scroll to which the vehicle cabin inside air is sucked, and, in which the motor accommodation part is provided with a cooling air supply port that communicates with the cooling air intake port and guides the cooling air to the motor.

According to the above embodiments of the invention, it is possible to provide a centrifugal blower unit for a two-layer flow type air conditioning device capable of effectively cooling a motor while preventing a problem caused by mixture of vehicle cabin inside air with outside air when the centrifugal blower unit is operating.

### BRIEF DESCRIPTION OF THE DRAWINGS

Fig. 1 is a longitudinal sectional view illustrating the structure of a centrifugal blower unit and an air intake part of an air conditioning device according to a first embodiment of the invention and including a meridian cross section of the centrifugal blower unit.
Fig. 2 is a longitudinal sectional view illustrating the structure of the centrifugal blower unit and the air intake part of the air conditioning device, taken along a plane orthogonal to the cross section in Fig. 1.
Fig. 3 is a cross sectional view illustrating a first scroll illustrated in Fig. 1, taken along a plane orthogonal to a rotational axis line of the centrifugal blower unit.
Fig. 4 is a cross sectional view illustrating a second scroll illustrated in Fig. 1, taken along a plane orthogonal to the rotational axis line of the centrifugal blower unit.
Fig. 5 is a perspective view illustrating a scroll housing illustrated in Fig. 1.
Fig. 6, which corresponds to Fig. 1, is a longitudinal sectional view illustrating the structure of a centrifugal blower unit and an air intake part of an air conditioning device according to a second embodiment of the invention and including a meridian cross section of the centrifugal blower unit.
Fig. 7 is a perspective view illustrating a scroll housing illustrated in Fig. 6.

### DESCRIPTION OF THE PREFERRED EMBODIMENTS

### <First embodiment>

The first embodiment of the invention will be described with reference to the attached drawings.

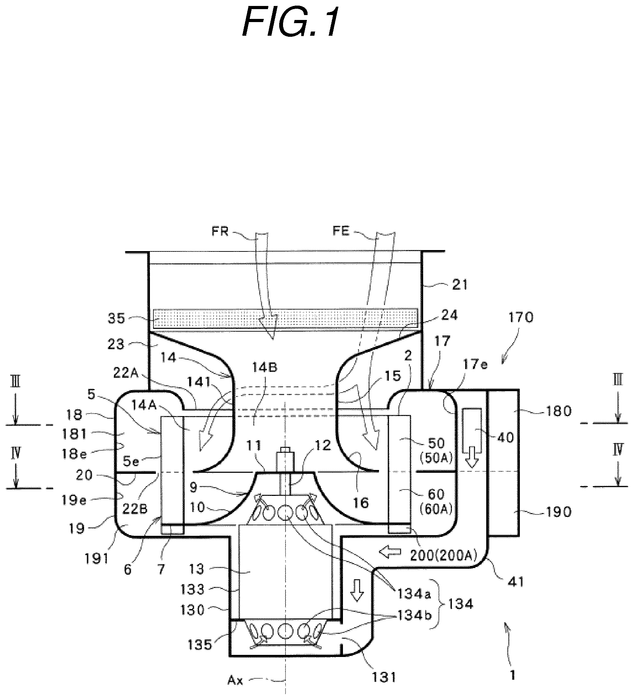

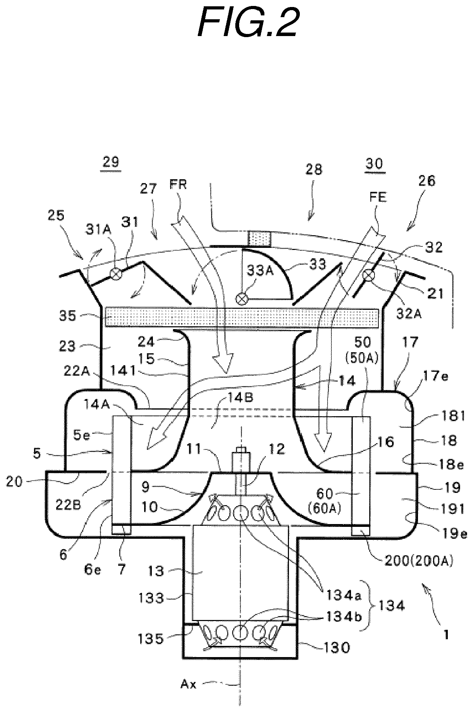

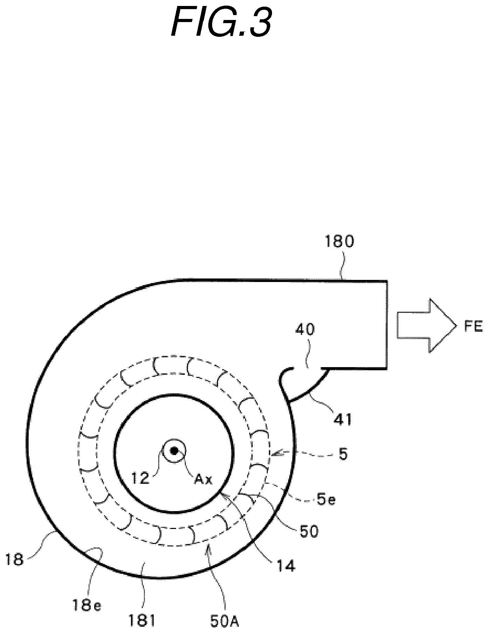

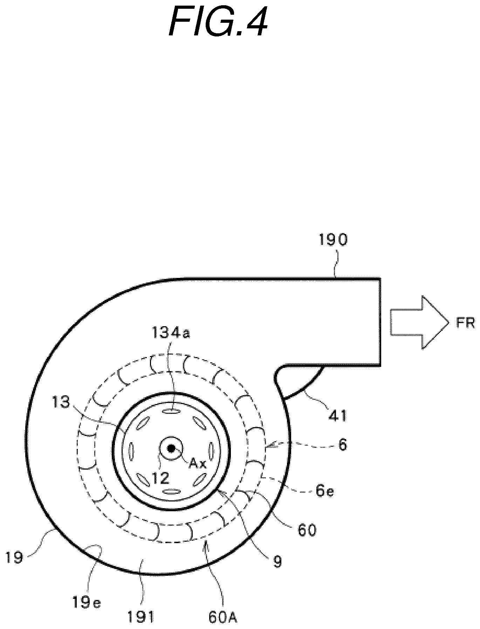

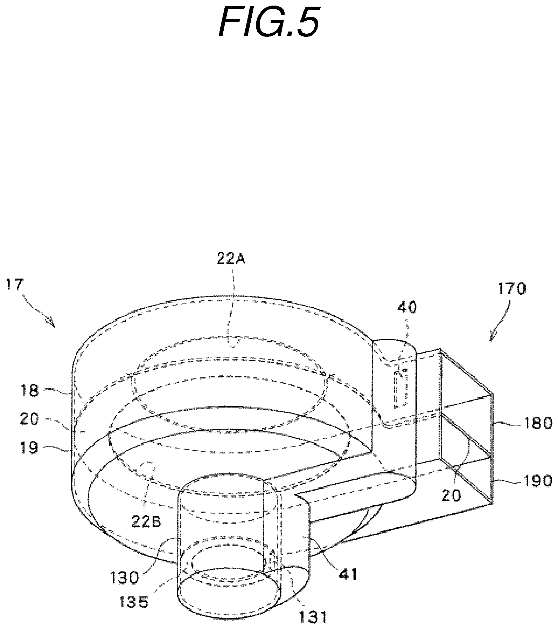

Fig. 1 and Fig. 2 are sectional views illustrating the structure of a centrifugal blower unit and an air intake part of an in-vehicle air conditioner. In addition, Fig. 3 and Fig. 4 are sectional views illustrating the structure of a first scroll and the structure of a second scroll, respectively. Fig. 5 is a perspective view illustrating a scroll housing including the first scroll and the second scroll.

A centrifugal blower unit 1 according to the embodiment is a centrifugal blower unit for a two-layer flow type air conditioning and is used for the in-vehicle air conditioner. As illustrated in Fig. 1 and Fig. 2, the centrifugal blower unit 1 includes a motor 13, a motor accommodation part 130 in which the motor 13 is accommodated, a first impeller wheel 5 and a second impeller wheel 6 arranged along a rotational axis line Ax of the motor 13, a first scroll 18 in which the first impeller wheel 5 is accommodated, and a second scroll 19 in which the second impeller wheel 6 is accommodated. The first impeller wheel 5, the second impeller wheel 6, and the motor 13 are arranged in this order from one side to the other side in the axial direction (from the upper side to the lower side in the example illustrated in Fig. 1). In addition, the first scroll 18, the second scroll 19, and the motor accommodation part 130 are arranged in this order from one side to the other side in the axial direction (from the upper side to the lower side in the example illustrated in Fig. 1).

In this specification, for descriptive convenience, the direction of the rotational axis line Ax is referred to as the axial direction or the up-down direction and the upper side and the lower side in Fig. 1 and Fig. 2 are referred to as "one side in the axial direction" or "the upper side " and "the other side in the axial direction" or "the lower side", respectively. However, this does not cause the direction of the rotational axis line Ax to coincide with the orthogonal direction when the air conditioning device is actually assembled to a vehicle. In addition, unless otherwise specified, the direction of the radius of a circle drawn on a plane orthogonal to the rotational axis line Ax about any point in the rotational axis line Ax is referred to as the radial direction and the circumferential direction of this circle is referred to as the peripheral direction or the circumferential direction.

Fig. 3 is a cross sectional view illustrating the first scroll 18 in Fig. 1, taken along a plane including line III-III orthogonal to the rotational axis line Ax of the centrifugal blower unit 1. As illustrated in Fig. 3, the first impeller wheel 5 has a plurality of blades 50 that forms a blade row 50A arranged in the circumferential direction, on its outer periphery. The first impeller wheel 5 is rotationally driven by the motor 13 about the rotational axis line Ax extending in the axial direction to blow out the air in the space radially inward of the blade row 50A in the centrifugal direction. The first impeller wheel 5 is accommodated in a substantially cylindrical first impeller wheel-specific inner space of the first scroll 18.

As illustrated in Fig. 1, Fig. 2, and Fig. 3, the first scroll 18 has a first suction port 22A opened in the axial direction and a first discharge port 180 opened in the circumferential direction. As illustrated in Fig. 3, the first discharge port 180 extends substantially in the tangential direction of the outer peripheral surface of the first scroll 18 when the first scroll 18 is seen from the axial direction. As illustrated in Fig. 1, Fig. 2, and Fig. 3, a first air flow path 181 is formed between an inner peripheral surface 18e of the first scroll 18 and an outer peripheral surface 5e of the first impeller wheel 5.

Fig. 4 is a cross sectional view illustrating the second scroll 19 illustrated in Fig. 1, taken along a plane including line IV-IV orthogonal to the rotational axis line Ax of the centrifugal blower unit 1. As illustrated in Fig. 4, the second impeller wheel 6 has a plurality of blades 60 that forms a blade row 60A arranged in the circumferential direction, on its outer periphery. The second impeller wheel 6 is rotationally driven by the motor 13 about the rotational axis line Ax to blow out the air in the space radially inward of the blade row 60A in the centrifugal direction. The second impeller wheel 6 is provided concentrically with the first impeller wheel 5. The second impeller wheel 6 is accommodated in a substantially cylindrical second impeller wheel-specific inner space of the second scroll 19.

As illustrated in Fig. 1, Fig. 2, and Fig. 4, the second scroll 19 has a second suction port 22B opened in the axial direction and a second discharge port 190 opened in the circumferential direction. As illustrated in Fig. 4, the second discharge port 190 extends substantially in the tangential direction of the outer peripheral surface of the second scroll 19 when the second scroll 19 is seen from the axial direction. As illustrated in Fig. 1, Fig. 2, and Fig. 4, a second air flow path 191 is formed between an inner peripheral surface 19e of the second scroll 19 and an outer peripheral surface 6e of the second impeller wheel 6.

In the example illustrated in Fig. 1 and Fig. 2, the centrifugal blower unit 1 is a single suction type centrifugal blower unit. More specifically, the first suction port 22A of the first scroll 18 is opened to one side (upper side) in the axial direction. In addition, the second suction port 22B of the second scroll 19 is also opened to the one side (upper side) in the axial direction. The first impeller wheel-specific inner space of the first scroll 18 communicates with the second impeller wheel-specific inner space of the second scroll 19 via the second suction port 22B.

In addition, in the example illustrated in Fig. 1 and Fig. 2, the first scroll 18 and the second scroll 19 are formed integrally with each other to form a scroll housing 17. The scroll housing 17 has the first suction port 22A opened to the one side in the axial direction and a discharge port 170 opened in the circumferential direction. The scroll housing 17 has a partitioning wall 20 that divides the inner space into the first scroll 18 and the second scroll 19 in the axial direction. The partitioning wall 20 has a part extending radially inward from an inner peripheral surface 17e of the scroll housing 17 and divides the region between the inner peripheral surface 17e of the scroll housing 17 and the outer peripheral surfaces 5e and 6e of the impeller wheels 5 and 6 of the inner space of the scroll housing 17 in the axial direction (up-down direction) . In addition, the partitioning wall 20 has a part that divides the inner space of the discharge port 170 in the axial direction (up-down direction).

In the example illustrated in Fig. 1 and Fig. 2, the first impeller wheel 2 and the second impeller wheel 6 are formed integrally with each other. In addition, an inside deflection member 9 is formed integrally with the impeller wheels 5 and 6. The inside deflection member 9 may also be referred to as a cone part. This inside deflection member 9 is a rotating body geometrically and includes a side peripheral part 10 connected to a lower end 7 of the second impeller wheel 6 and a discoid central part 11. In the central part 11, a rotational shaft 12 of the motor 13 is coupled to the impeller wheels 5 and 6. In this example, the side peripheral part 10 is bent so that the outline in the meridian cross section of the outer peripheral surface of the side peripheral part 10 is inclined more steeply toward the central part 11. In another example (not illustrated), the outline in the meridian cross section of the outer peripheral surface of the side peripheral part 10 may not be bent (the cross section is linear) toward the blade row 60A from the central part 11.

As illustrated in Fig. 1 and Fig. 2, the motor 13 has a motor housing 133 in which a driving part for rotationally driving the rotational shaft 12 of the motor 13 is accommodated. The motor housing 133 is substantially cylindrical and the rotational shaft 12 extends from an end part of one side (upper side) in the axial direction. The motor accommodation part 130 is also substantially cylindrical. The motor accommodation part 130 has a motor-specific inner space in which the motor 13 is accommodated. The motor-specific inner space is opened to the second impeller wheel-specific inner space. An end part of one side (side close to the rotational shaft 12) in the axial direction of the motor 13 extends from the motor-specific inner space to the second impeller wheel-specific inner space.

A separation cylinder 14 is inserted into the scroll housing 17 via the first suction port 22A. As is clear by making comparison between Fig. 1 and Fig. 2, the cross sectional shape of an entrance side end part (upper part) 24 of the separation cylinder 14 is substantially a rectangle. The cross sectional shape of a central part 15 of the separation cylinder 14 is a circle (or substantially a circle). The cross sectional shape of the separation cylinder 14 gradually changes from a rectangle to a circle (or substantially a circle) toward the central part 15 from the entrance side end part 24. An exit side end part (lower part) 16 of the separation cylinder 14 has a flare shape with a diameter that increases toward the lower end and the lower end is circular.

The separation cylinder 14 passes radially inward of the first suction port 22A and radially inward of the blade row 50A of the first impeller wheel 5 and extends in the axial direction. The entrance side end part 24 of the separation cylinder 14 is positioned outward (above the first suction port 22A in the axial direction) of the scroll housing 17. The exit side end part 16 of the separation cylinder 14 is provided substantially at the same position in the axial direction as in the partitioning wall 20.

The entire separation cylinder 14 may be integrally formed by injection molding of resin. Alternatively, the entrance side end part (upper part) 24 of the separation cylinder 14 and the central part 15 and the exit side end part (lower part) 16 of the separation cylinder 14 may be molded separately and then they may be coupled to each other.

The separation cylinder 14 divides a flow of air sucked to the scroll housing 17 via the first suction port 22A into a first air flow passing through a first passage 14A outward of the separation cylinder 14 and a second air flow passing through a second passage 14B inward of the separation cylinder 14. The first air flow passes through an annular region outward of an outer peripheral surface 141 of the separation cylinder 14 in the first suction port 22A of the first scroll 18 and flows into a radially inward part of the blade row 50A of the first impeller wheel 5. The second air flow enters the inside of the separation cylinder 14 from the upper end of the separation cylinder 14, passes through the second suction port 22B of the second scroll 19, and flows into a radially inward part of the blade row 60A of the second impeller wheel 6. Accordingly, the annular region outward of the outer peripheral surface 141 of the separation cylinder 14 in the first suction port 22A of the first scroll 18 can be regarded as a first inhalation port of the scroll housing 17 and the entrance side end part 24 of the separation cylinder 14 can be regarded as a second inhalation port of the scroll housing 17. The exit side end part 16 of the separation cylinder 14 redirects the first air flow having flowed to a radially outward direction and guides the first air flow to the first air flow path 181. In addition, the exit side end part 16 redirects the second air flow having flowed to a radially outward direction and guides the second air flow to the second air flow path 191. The exit side end part 16 faces the inside deflection member 9 and a passage for the second air flow is formed between the exit side end part 16 and the inside deflection member 9.

Next, the air intake part of the air conditioning device will be described with reference to Fig. 2. The air intake part of the air conditioning device has a housing 21. This housing 21 is referred to as the "air intake housing" to distinguish it from the scroll housing 17. The scroll housing 17 and the air intake housing 21 may be molded integrally with each other or may be coupled by a method such as screblade, bonding, or insertion after being created separately from each other. The scroll housing 17 and the air intake housing 21 are parts of an air conditioning device casing. In a preferable embodiment, the separation cylinder 14 is a component separate from the scroll housing 17 and the air intake housing 21 and is supported at a predetermined position by the air intake housing 21.

The air intake housing 21 includes a first opening 25, a second opening 26, a third opening 27, and a fourth opening 28. Vehicle cabin inside air (air in the vehicle cabin) can be introduced from a vehicle cabin space 29 (details are not illustrated) to an inner space 23 of the air intake housing 21 via the first opening 25 and the third opening 27. That is, the first opening 25 and the third opening 27 are first and second inside air introduction ports through which vehicle cabin inside air is taken in to the air intake housing 21. In addition, outside air (air taken in from the outside of the vehicle) can be introduced from an exit 30 (details are not illustrated) of an outside air introduction passage provided in the vehicle to the inner space 23 of the air intake housing 21 via the second opening 26 and the fourth opening 28. That is, the second opening 26 and the fourth opening 28 are first and second outside air introduction ports through which outside air is taken in to the air intake housing 21.

By pivoting a door 31 about a rotational shaft 31A, inflow of air (vehicle cabin inside air) from the first opening 25 to the air intake housing 21 can be allowed or interrupted. By pivoting a door 32 about a rotational shaft 32A, inflow of air (outside air) from the second opening 26 to the air intake housing 21 can be allowed or interrupted. By pivoting a door 33 about a rotational shaft 33A to switch between positions, air (vehicle cabin inside air or outside air) can flow into the air intake housing 21 via any one of the third opening 27 and the fourth opening 28.

The air intake housing 21 and the separation cylinder 14 are formed so that almost all of the air introduced from the first opening 25 and/or the second opening 26 to the air intake housing 21 passes through the first passage 14A and almost all of the air introduced from the third opening 27 and/or the fourth opening 28 to the air intake housing 21 passes through the second passage 14B.

Fig. 2 illustrates the layout of the doors of the air intake housing 21 when an in-vehicle air conditioner is operated in an inside air/outside air two-layer flow mode described later. In the inside air/outside air two-layer flow mode, the positions of the doors 31, 32, and 33 of the air intake housing 21 are determined so that outside air FE of the vehicle is sucked to one of the first scroll 18 and the second scroll 19 and vehicle cabin inside air FR is sucked to the other of the first scroll 18 and the second scroll 19. In the folloblade description, as illustrated in Fig. 2, when the inside air/outside air two-layer flow mode is executed, the doors 31, 32, and 33 of the air intake housing 21 are disposed so that the outside air FE is sucked to the first scroll 18 and the vehicle cabin inside air FR is sucked to the second scroll 19. That is, the separation cylinder 14 guides the outside air FE to the first air flow path 181 positioned on one side (upper side) in the axial direction via the outside of the separation cylinder 14 and guides the vehicle cabin inside air FR to the second air flow path 191 positioned on the other side (lower side, that is, the side close to the motor 13) in the axial direction via the inside of the separation cylinder 14.

An outside air mode and an inside air mode are provided in addition to the inside air/outside air two-layer flow mode, as the operation mode of the in-vehicle air conditioner. In the outside air mode, the outside air FE is sucked to both the first scroll 18 and the second scroll 19. In the inside air mode, the vehicle cabin inside air FR is sucked to both the first scroll 18 and the second scroll 19.

A filter 35 for removing contaminants such as dust and particles in air is provided in the air intake housing 21 between the region in which the first opening 25, the second opening 26, the third opening 27, and the fourth opening 28 are disposed and the entrance side end part 24 of the separation cylinder 14. The filter 35 preferably includes a single filter element.

By the way, when the impeller wheels 5 and 6 are rotationally driven continuously by the motor 13, the motor 13 generates heat. When the motor 13 generates heat, then the temperature of internal electric wires rises, the electric resistance increases, and the power consumption of the motor 13 increases.

Accordingly, the first embodiment illustrated in Fig. 1 to Fig. 5 has a twist for cooling the motor 13 that rotationally drives the impeller wheels 5 and 6.

Particularly, in the first embodiment, when the in-vehicle air conditioner is operated in the inside air/outside air two-layer flow mode, the outside air FE of the vehicle cabin inside air FR and the outside air FE flowing through the scroll housing 17 is used as the cooling air for cooling the motor 13. Specifically, in the inside air/outside air two-layer flow mode in which the outside air FE is sucked to one of the first scroll 18 and the second scroll 19 and the vehicle cabin inside air FR is sucked to the other of the first scroll 18 and the second scroll 19, the air flowing through the scroll to which the outside air FE is sucked is used as cooling air for cooling the motor 13.

When the inside air/outside air two-layer flow mode is selected as the operation mode of the in-vehicle air conditioner (that is, when the heating efficiency needs to be improved while defrosting the front glass), since the temperature of the outside air FE is generally lower than that of the vehicle cabin inside air FR, the outside air FE can cool the motor 13 effectively.

The structure of the centrifugal blower unit 1 according to the embodiment will be described below in more detail with reference to the drawings. As described above, when the in-vehicle air conditioner is operated in the inside air/outside air two-layer flow mode, the outside air FE is sucked to the first scroll 18 and the vehicle cabin inside air FR is sucked to the second scroll 19 in the following description.

As illustrated in Fig. 1 and Fig. 5, when the inside air/outside air two-layer flow mode is executed, the first scroll 18 to which the outside air FE is sucked is provided with a cooling air intake port 40 through which cooling air for cooling the motor 13 is taken in. In the illustrated example, the cooling air intake port 40 is provided on the surface facing the tongue part of the first scroll 18 in the first discharge port 180 of the first scroll 18. In addition, the motor accommodation part 130 is provided with a cooling air supply port 131 through which the cooling air taken in via the cooling air intake port 40 is supplied to the motor-specific inner space of the motor accommodation part 130. The cooling air intake port 40 communicates with the cooling air supply port 131 via a cooling air guide passage 41 formed on the side surfaces of the scroll housing 17 and the motor accommodation part 130. This can cause the cooling air supply port 131 to guide the cooling air from the first scroll 18 to the motor 13 accommodated in the motor accommodation part 130. Since the outside air FE is taken in to the motor accommodation part 130 as described above, the motor 13 can be cooled effectively.

In addition, as illustrated in Fig. 1 and Fig. 2, the motor housing 133 of the motor 13 is provided with an air hole 134. This enables the cooling air supplied to the motor accommodation part 130 via the cooling air supply port 131 to be taken in to the inside of the motor housing 133. As a result, the motor 13 can be cooled more effectively.

Particularly, in the illustrated example, the air hole 134 includes a one-side air hole 134a provided in the end part of one side (upper side) in the axial direction of the motor housing 133 and an other-side air hole 134b provided in the end part of the other side (lower side) in the axial direction of the motor housing 133. This enables the cooling air to be taken in to the motor housing 133 from the other-side air hole 134b, pass through the motor housing 133, and be exhausted from the one-side air hole 134a. In this case, the warm cooling air after cooling the motor 13 is prevented from remaining in the motor housing 133. As a result, the motor 13 can be cooled more effectively.

In the illustrated example, the cooling air supply port 131 is provided on the other side (lower side) in the axial direction of the motor accommodation part 130 so that the cooling air is taken in from the other-side air hole 134b and exhausted from the one-side air hole 134a, and the cooling air is supplied to the vicinity of the other-side air hole 134b. It is prevented that by exhausting the cooling air from the one-side air hole 134a, the warm cooling air after cooling the motor 13 is exhausted to the inside of the motor accommodation part 130 and the warm air from remains in the motor accommodation part 130. As a result, the motor 13 can be cooled more effectively.

In addition, as in the illustrated example, it is preferable to add a twist for causing the cooling air to be more surely taken in from the other-side air hole 134b. That is, the motor accommodation part 130 has a dividing wall 135 that divides, in the axial direction, the space between the inner peripheral surface of the motor accommodation part 130 and the outer peripheral surface of the motor housing 133. The other-side air hole 134b and the cooling air supply port 131 are disposed on the other side (lower side) in the axial direction of the dividing wall 135. This supplies the cooling air from the cooling air supply port 131 to the space between the dividing wall 135 and the bottom surface of the motor accommodation part 130 so that the cooling air can be taken in efficiently from the other-side air hole 134b of the motor housing 133 positioned in this space.

In addition, the illustrated example has a twist for promoting the cooling of the motor 13 by removing the warm cooling air after cooling the motor 13 from the periphery of the motor 13. That is, each of the blades 60 of the second impeller wheel 6 is provided with a lower blade 200 extending toward the other side in the axial direction from the connection part between the blades 60 and the inside deflection member 9. The plurality of lower blades 200 extending from the plurality of blades 60 forms a circumferential direction blade row 200A. When the second impeller wheel 6 is rotationally driven about the rotational axis line Ax by the motor 13, the plurality of lower blades 200 blows out the air present radially inward of the blade row 200A in the centrifugal direction. As is clear from Fig. 1 and Fig. 2, the cooling air having been used for cooling the motor 13 is exhausted to the region radially inward of the blade row 200A. Accordingly, when the plurality of lower blades 200 rotates, the cooling air is blown out from the region and removed. This prevents the warm cooling air after cooling the motor 13 from remaining around the motor 13.

Next, the operation of the in-vehicle air conditioner illustrated in Fig. 1 to Fig. 5 will be described.

In a first operation mode of the in-vehicle air conditioner, the second opening 26 and the fourth opening 28 are opened and the first opening 25 and the third opening 27 are closed. This state is not illustrated. In this case, the outside air introduced from the second opening 26 forms the first air flow that passes through the first passage 14A outward of the separation cylinder 14 and flows into the blade row 50A of the first impeller wheel 5. In addition, the outside air introduced from the fourth opening 28 forms the second air flow that passes through the second passage 14B inward of the separation cylinder 14 and flows into the blade row 60A of the second impeller wheel 6. The first operation mode is also referred to as the outside air mode.

In a second operation mode, the second opening 26 and the third opening 27 are opened and the first opening 25 and the fourth opening 28 are closed. This state is illustrated in Fig. 1 and Fig. 2. In this case, the outside air FE introduced from the second opening 26 forms the first air flow that passes through the first passage 14A outward of the separation cylinder 14 and flows into the blade row 50A of the first impeller wheel 5. In addition, the vehicle cabin inside air FR introduced from the third opening 27 forms the second air flow that passes through the second passage 14B inward of the separation cylinder 14 and flows into the blade row 60A of the second impeller wheel 6. The second operation mode may also be referred to as the inside air/outside air two-layer flow mode.

In a third operation mode, the first opening 25 and the third opening 27 are opened and the second opening 26 and the fourth opening 28 are closed. This state is not illustrated. In this case, the vehicle cabin inside air introduced from the first opening 25 forms the first air flow that passes through the first passage 14A outward of the separation cylinder 14 and flows into the blade row 50A of the first impeller wheel 5. In addition, the vehicle cabin inside air introduced from the third opening 27 forms the second air flow that passes through the second passage 14B inward of the separation cylinder 14 and flows into the blade row 60A of the second impeller wheel 6. The third operation mode may also be referred to as the inside air mode.

The inside air/outside air two-layer flow mode (second operation mode) is used when, for example, operation in the defrost foot mode is performed. At this time, conditioned air having a relatively low moisture amount is blown out toward the front window (not illustrated) of the vehicle from the defrost blowout port of the vehicle cabin and conditioned air having a relatively high moisture amount is blown out toward the feet of occupants from the foot blowout port (not illustrated) of the vehicle cabin.

When the outside air FE at low temperature is mixed with the vehicle cabin inside air FR to be supplied to the foot blowout port during execution of the inside air/outside air two-layer flow mode (second operation mode), there is concern about reduction in the heating efficiency. In addition, when the vehicle cabin inside air FR having a relatively high moisture amount is mixed with the outside air FE to be supplied to the defroster blowout port during execution of the inside air/outside air two-layer flow mode in the defrost foot mode, there is concern about reduction in the effect of preventing the fogging of the front window. Accordingly, when the inside air/outside air two-layer flow mode is executed, it is preferable that all of the outside air FE flows into the first air flow path 181 and all of the vehicle cabin inside air FR flows into the second air flow path 191.

Since only vehicle cabin inside air or only outside air is used when the outside air mode (first operation mode) or the inside air mode (third operation mode) is executed, the request for avoidance of mixture of vehicle cabin inside air with outside air is not higher than in the inside air/outside air two-layer flow mode.

In any operation mode, when the first impeller wheel 5 and the second impeller wheel 6 are rotationally driven by the motor 13, the air present radially inward of the circumferential direction blade rows 50A and 60A of the impeller wheels 5 and 6 is blown out in the centrifugal direction. This causes air to flow into the scroll housing 17 via the first suction port 22A. Of the air flowing into the scroll housing 17, the first air flow passing outward of the separation cylinder 14 is guided by the separation cylinder 14, flows into the first air flow path 181 formed between the outer peripheral surface 5e of the first impeller wheel 5 and the inner peripheral surface 18e of the first scroll 18, and flows into the first discharge port 180. In addition, of the air flowing into the scroll housing 17, the second air flow passing inward of the separation cylinder 14 is guided by the separation cylinder 14, flows into the second air flow path 191 formed between the outer peripheral surface 6e of the second impeller wheel 6 and the inner peripheral surface 19e of the second scroll 19, and flows into the second discharge port 190. Part of the first air flow having flowed into the first discharge port 180 flows into the cooling air guide passage 41 through the cooling air intake port 40 provided in the first discharge port 180 as cooling air for cooling the motor 13 and flows into the motor accommodation part 130 via the cooling air supply port 131. The cooling air having flowed into the motor accommodation part 130 flows into the motor housing 133 via the other-side air hole 134b of the motor housing 133, flows toward one side in the axial direction in the motor housing 133, and is exhausted through the one-side air hole 134a. The cooling air exhausted through the one-side air hole 134a is blown out in the centrifugal direction by the lower blades 200 provided in the second impeller wheel 6. The blown cooling air flows into the second air flow path 191.

As described above, in the illustrated example, when the inside air/outside air two-layer flow mode (second operation mode) is executed, the outside air FE at low humidity and low temperature flows into the first air flow path 181 and the first discharge port 180 as the first air flow. In addition, the warm vehicle cabin inside air FR at high humidity flows into the second air flow path 191 and the second discharge port 190 as the second air flow. Then, part of the outside air FE having flowed into the first discharge port 180 is taken in the motor accommodation part 130 as cooling air, cools the motor 13, and flows into the second air flow path 191. Accordingly, part of the outside air FE flows into the second air flow path 191 through which the vehicle cabin inside air FR flows and is supplied to the foot blowout port. Accordingly, there is concern about reduction in the heating efficiency as described above. However, the cooling air (outside air FE) flowing into the second air flow path 191 is heated by the motor. In addition, the amount of the cooling air (outside air FE) flowing into the second air flow path 191 is much smaller than the amount of the vehicle cabin inside air FR flowing through the second air flow path 191. Accordingly, even when the cooling air that is the outside air FE flows into the second air flow path 191 and is supplied to the foot blowout port, the possibility of reduction in the heating efficiency is small.

### <Second embodiment>

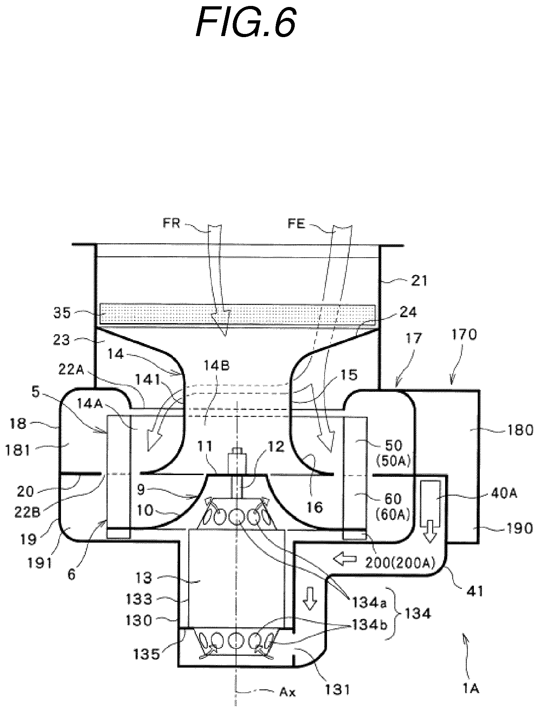

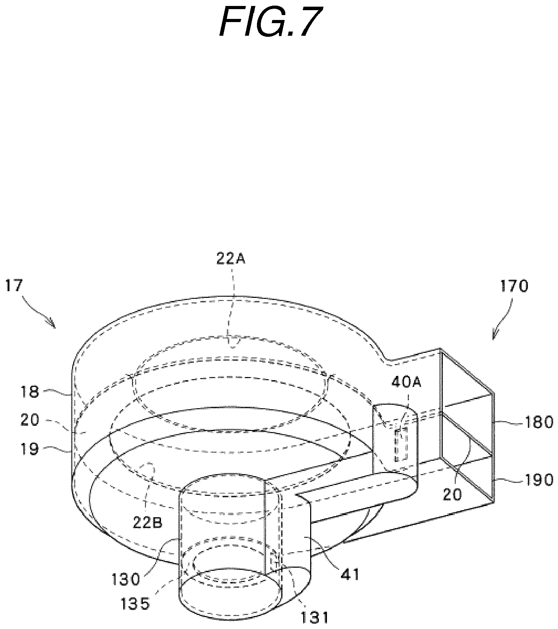

Next, a centrifugal blower unit 1A according to the second embodiment will be described with reference to Fig. 6 and Fig. 7. Fig. 6, which corresponds to Fig. 1, is a sectional view illustrating the structure of the centrifugal blower unit and the air intake part of the in-vehicle air conditioner. Fig. 7, which corresponds to Fig. 5, is a perspective view illustrating the scroll housing including the first scroll and the second scroll.

The centrifugal blower unit 1A illustrated in Fig. 6 and Fig. 7 is different from the centrifugal blower unit 1 illustrated in Fig. 1 in that a cooling air intake port 40A through which cooling air for cooling the motor 13 is taken in is provided in the scroll to which the vehicle cabin inside air FR is sucked when the outside air FE of the vehicle is sucked to one of the first scroll 18 and the second scroll 19 and the vehicle cabin inside air FR is sucked to the other of the first scroll 18 and the second scroll 19. The other structure is substantially the same as that of the first embodiment illustrated in Fig. 1. In the second embodiment illustrated in Fig. 6 and Fig. 7, the same components as in the first embodiment illustrated in Fig. 1 to Fig. 5 are given the same reference numerals and detailed descriptions are omitted.

Also in the example illustrated in Fig. 6 and Fig. 7, when the in-vehicle air conditioner is operated in the inside air/outside air two-layer flow mode, the outside air FE is sucked to the first scroll 18 and the vehicle cabin inside air FR is sucked to the second scroll 19.

As illustrated in Fig. 6 and Fig. 7, the cooling air intake port 40A is provided in the second scroll 19 to which the vehicle cabin inside air FR is sucked when the inside air/outside air two-layer flow mode is executed. More specifically, the cooling air intake port 40A is provided on a surface facing the tongue part of the second scroll 19 in the second discharge port 190 of the second scroll 19. The cooling air intake port 40A communicates with the cooling air supply port 131 provided in the motor accommodation part 130 via the cooling air guide passage 41.

Next, the operation of the centrifugal blower unit illustrated in Fig. 6 and Fig. 7 will be described.

In any of the three operation modes described above, when the first impeller wheel 5 and the second impeller wheel 6 are rotationally driven by the motor 13, the air present radially inward of the circumferential direction blade rows 50A and 60A of the impeller wheels 5 and 6 is blown out in the centrifugal direction. This causes air to flow into the scroll housing 17 via the first suction port 22A. Of the air flowing into the scroll housing 17, the first air flow passing outward of the separation cylinder 14 is guided by the separation cylinder 14, flows into the first air flow path 181 formed between the outer peripheral surface 5e of the first impeller wheel 5 and the inner peripheral surface 18e of the first scroll 18, and flows into the first discharge port 180. In addition, of the air flowing into the scroll housing 17, the second air flow passing inward of the separation cylinder 14 is guided by the separation cylinder 14, flows into the second air flow path 191 formed between the outer peripheral surface 6e of the second impeller wheel 6 and the inner peripheral surface 19e of the second scroll 19, and flows into the second discharge port 190. Part of the second air flow having flowed into the second discharge port 190 flows into the cooling air guide passage 41 from the cooling air intake port 40A provided in the second discharge port 190 as cooling air for cooling the motor 13, and flows into the motor accommodation part 130 via the cooling air supply port 131. The cooling air having flowed into the motor accommodation part 130 flows into the motor housing 133 via the other-side air hole 134b of the motor housing 133, flows through the motor housing 133 toward one side in the axial direction, and is exhausted from the one-side air hole 134a. The cooling air exhausted from the one-side air hole 134a is blown out in the centrifugal direction by the lower blades 200. The blown cooling air flows into the second air flow path 191.

In the illustrated example, when two operation modes (inside air/outside air two-layer flow mode and inside air mode) of the three operation modes described above are executed, the relatively warm vehicle cabin inside air FR is used as cooling air. However, since the temperature of the vehicle cabin inside air FR is generally lower than the temperature of the motor 13 to be cooled, the motor 13 can be cooled effectively.

In addition, in the illustrated example, the vehicle cabin inside air FR is sucked to the second scroll 19 positioned close to the motor 13 among the first scroll 18 and the second scroll 19 in the inside air/outside air two-layer flow mode, as described above. Accordingly, in the illustrated example, the cooling air for cooling the motor 13 is taken in from the scroll 19 positioned close to the motor 13 and the air having cooled the motor 13 is exhausted to the scroll 19 positioned close to the motor 13. Accordingly, in the illustrated example, mixture of outside air with vehicle cabin inside air is not caused in the inside air/outside air two-layer flow mode that highly requests avoidance of mixture of outside air with vehicle cabin inside air.

It should be noted that various modifications can be made to the embodiments described above. For example, although the vehicle cabin inside air FR is sucked to the second scroll 19 positioned close to the motor 13 among the first scroll 18 and the second scroll 19 and the outside air FE is sucked to the first scroll 18 when the inside air/outside air two-layer flow mode (second operation mode) is executed in the first embodiment, the invention is not limited to this embodiment. The outside air FE may be sucked to the second scroll 19 positioned close to the motor 13 and the vehicle cabin inside air FR may be sucked to the first scroll 18 when the inside air/outside air two-layer flow mode is executed.

In this case, when the inside air/outside air two-layer flow mode is executed, the first opening 25 and the fourth opening 28 are opened and the third opening 27 and the second opening 26 are closed. The vehicle cabin inside air FR introduced through the first opening 25 forms the first air flow that passes through the first passage 14A outward of the separation cylinder 14 and flows into the blade row 50A of the first impeller wheel 5. In addition, the outside air FE introduced through the fourth opening 28 forms the second air flow that passes through the second passage 14B inward of the separation cylinder 14 and flows into the blade row 60A of the second impeller wheel 6.

In such a centrifugal blower unit, the cooling air intake port 40 through which the outside air FE is taken in as cooling air is provided in the second scroll 19 positioned close to the motor 13. The cooling air taken in from the second scroll 19 passes through the motor accommodation part 130 and flows into the second scroll 19 again. In this case, the outside air FE at low temperature can be used as cooling air and mixture of outside air with vehicle cabin inside air is not caused in the inside air/outside air two-layer flow mode in which avoidance of mixture of outside air with vehicle cabin inside air is highly requested.

In addition, although the cooling air guide passage 41 through which the cooling air intake port 40 or 40A communicates with the cooling air supply port 131 is formed on the side surfaces of the scroll housing 17 and the motor accommodation part 130 above, part of the cooling air guide passage 41 may be replaced with a hollow hose or may be provided in a discoid member for fixing the motor 13 to the scroll housing 17.

The centrifugal blower unit for an in-vehicle air conditioner according to the invention can be manufactured industrially and can become the target of a business transaction, so the centrifugal blower unit has economic value and can be used industrially.

### Description of Reference Numerals and Signs

1: centrifugal blower unit
5: first impeller wheel
50: blade of first impeller wheel
6: second impeller wheel
60: blade of second impeller wheel
13: motor
130: motor accommodation part
131: cooling air supply port
133: motor housing
134: air hole
14: separation cylinder
16: exit side end part
17: scroll housing
18: first scroll
180: first discharge port
181: first air flow path
19: second scroll
190: second discharge port
191: second air flow path
20: partitioning wall
21: air intake housing
40: cooling air intake port
41: cooling air guide passage
Ax: rotational axis line

## Claims

1. A centrifugal blower unit (1) for a vehicle, **characterized by** comprising:
a motor (13);
a first impeller wheel (5) that has a plurality of blades (50) forming a circumferential direction blade row (50A), is rotationally driven by the motor (13) about a rotational axis line (Ax) extending in an axial direction, and blows out air present radially inward of the blade row (50A) in a centrifugal direction;
a first scroll (18) including a first impeller wheel-specific inner space in which the first impeller wheel (5) is accommodated, a first suction port (22A) opened in the axial direction, and a first discharge port (180) opened in a circumferential direction, a first air flow path (181) being formed between an inner peripheral surface of the first scroll (18) and an outer peripheral surface of the first impeller wheel (5) ;
a second impeller wheel (6) having a plurality of blades (60) forming a circumferential direction blade row (60A), the second impeller wheel (6) being rotationally driven by the motor (13) about the rotational axis line (Ax) to blow out air present radially inward of the blade row (60A) in the centrifugal direction, the second impeller wheel (6) being provided concentrically with the first impeller wheel (5);
a second scroll (19) including a second impeller wheel-specific inner space in which the second impeller wheel (6) is accommodated, a second suction port (22B) opened in the axial direction, and a second discharge port (190) opened in the circumferential direction, a second air flow path (191) being formed between an inner peripheral surface of the second scroll (19) and an outer peripheral surface of the second impeller wheel (6); and
a motor accommodation part (130) having a motor-specific inner space in which the motor (13) is accommodated,
wherein, when outside air (FE) of the vehicle is sucked to one of the first scroll (18) and the second scroll (19) and vehicle cabin inside air (FR) is sucked to the other of the first scroll (18) and the second scroll (19), a cooling air intake port (40) that intakes cooling air which cools the motor (13) is provided in the scroll to which the outside air (FE) is sucked, and
wherein the motor accommodation part (130) is provided with a cooling air supply port (131) that communicates with the cooling air intake port (40) and guides the cooling air to the motor (13).

2. The centrifugal blower unit (1) according to claim 1,
wherein the motor (13) has a motor housing (133) in which a driving part that rotationally drives a shaft (12) of the motor (13) is accommodated, and
wherein the motor housing (133) is provided with an air hole (134).

3. The centrifugal blower unit (1) according to claim 1 or 2,
wherein the first impeller wheel (5) and the second impeller wheel (6) are formed integrally with each other,
the first scroll (18) and the second scroll (19) form a scroll housing (17) in which the first impeller wheel-specific inner space communicates with the second impeller wheel-specific inner space via the second suction port (22B), the scroll housing (17) having the first suction port (22A) opened to one side in the axial direction and a discharge port (170) opened in the circumferential direction,
the scroll housing (17) has a partitioning wall (20) that divides, in the axial direction, a region between an inner peripheral surface of the scroll housing (17) and the outer peripheral surfaces of the first impeller wheel (5) and the second impeller wheel (6) and an inner space of the discharge port (170),
the motor accommodation part (130) is positioned on the other side in the axial direction of the second scroll (19),
the motor-specific inner space is opened to the second impeller wheel-specific inner space,
the centrifugal blower unit (1) further comprising:
a separation cylinder (14) that passes radially inward of the first suction port (22A) and radially inward of the blade row (50A) of the first impeller wheel (5) and extends in the axial direction, the separation cylinder (14) being provided to divide air sucked to the scroll housing (17) via the first suction port (22A) into a first air flow passing outward of the separation cylinder (14) and a second air flow passing inward of the separation cylinder (14),
wherein the separation cylinder (14) has an exit side end part (16) that redirects the first air flow to a radially outward direction to guide the first air flow to the first air flow path (181) and redirects the second air flow to a radially outward direction to guide the second air flow to the second air flow path (191).

4. The centrifugal blower unit (1) according to claim 3,
wherein the motor (13) has a motor housing (133) in which a driving part that rotationally drives a shaft (12) of the motor (13) is accommodated, and
air holes (134a and 134b) are provided in an end part on one side in the axial direction and an end part on the other side in the axial direction of the motor housing (133), respectively, and
the cooling air supply port (131) is provided in an end part on the other side in the axial direction of the motor accommodation part (130).

5. The centrifugal blower unit (1) according to claim 3 or 4,
wherein, when rotation of the first impeller wheel (5) and the second impeller wheel (6) causes the outside air (FE) and the vehicle cabin inside air (FR) of the vehicle to be sucked to the scroll housing (17), the separation cylinder (14) guides the outside air (FE) to the first air flow path (181) through an outside of the separation cylinder (14) and guides the vehicle cabin inside air (FR) to the second air flow path (191) through an inside of the separation cylinder (14), and
the cooling air intake port (40) is provided in the first scroll (18).

6. The centrifugal blower unit (1) according to claim 3 or 4,
wherein, when rotation of the first impeller wheel (5) and the second impeller wheel (6) causes the outside air (FE) and the vehicle cabin inside air (FR) of the vehicle to be sucked to the scroll housing (17), the separation cylinder (14) guides the outside air (FE) to the second air flow path (191) through an inside of the separation cylinder (14) and guides the vehicle cabin inside air (FR) to the first air flow path (181) through an outside of the separation cylinder (14), and
the cooling air intake port (40) is provided in the second scroll (19).

7. A centrifugal blower unit (1A) for a vehicle, **characterized by** comprising:
a motor (13);
a first impeller wheel (5) that has a plurality of blades (50) forming a circumferential direction blade row (50A), is rotationally driven by the motor (13) about a rotational axis line (Ax) extending in an axial direction, and blows out air present radially inward of the blade row (50A) in a centrifugal direction;
a first scroll (18) including a first impeller wheel-specific inner space in which the first impeller wheel (5) is accommodated, a first suction port (22A) opened in the axial direction, and a first discharge port (180) opened in a circumferential direction, a first air flow path (181) being formed between an inner peripheral surface of the first scroll (18) and an outer peripheral surface of the first impeller wheel (5) ;
a second impeller wheel (6) having a plurality of blades (60) forming a circumferential direction blade row (60A), the second impeller wheel (6) being rotationally driven by the motor (13) about the rotational axis line (Ax) to blow out air present radially inward of the blade row (60A) in the centrifugal direction, the second impeller wheel (6) being provided concentrically with the first impeller wheel (5);
a second scroll (19) including a second impeller wheel-specific inner space in which the second impeller wheel (6) is accommodated, a second suction port (22B) opened in the axial direction, and a second discharge port (190) opened in the circumferential direction, a second air flow path (191) being formed between an inner peripheral surface of the second scroll (19) and an outer peripheral surface of the second impeller wheel (6); and
a motor accommodation part (130) having a motor-specific inner space in which the motor (13) is accommodated,
wherein, when outside air (FE) of the vehicle is sucked to one of the first scroll (18) and the second scroll (19) and vehicle cabin inside air (FR) is sucked to the other of the first scroll (18) and the second scroll (19), a cooling air intake port (40A) that intakes cooling air which cools the motor (13) is provided in the scroll to which the vehicle cabin inside air (FR) is sucked, and
wherein the motor accommodation part (130) is provided with a cooling air supply port (131) that communicates with the cooling air intake port (40A) and guides the cooling air to the motor (13).

8. The centrifugal blower unit (1A) according to claim 7,
wherein the motor (13) has a motor housing (133) in which a driving part that rotationally drives a shaft (12) of the motor (13) is accommodated, and
wherein the motor housing (133) is provided with an air hole (134).

9. The centrifugal blower unit (1A) according to claim 7 or 8,
wherein the first impeller wheel (5) and the second impeller wheel (6) are formed integrally with each other,
the first scroll (18) and the second scroll (19) form a scroll housing (17) in which the first impeller wheel-specific inner space communicates with the second impeller wheel-specific inner space via the second suction port (22B), the scroll housing (17) having the first suction port (22A) opened to one side in the axial direction and a discharge port (170) opened in the circumferential direction,
the scroll housing (17) has a partitioning wall (20) that divides, in the axial direction, a region between an inner peripheral surface of the scroll housing (17) and the outer peripheral surfaces of the first impeller wheel (5) and the second impeller wheel (6) and an inner space of the discharge port (170),
the motor accommodation part (130) is positioned on the other side in the axial direction of the second scroll (19),
the motor-specific inner space is opened to the second impeller wheel-specific inner space,
the centrifugal blower unit (1A) further comprising:
a separation cylinder (14) that passes radially inward of the first suction port (22A) and radially inward of the blade row (50A) of the first impeller wheel (5) and extends in the axial direction, the separation cylinder (14) being provided to divide air sucked to the scroll housing (17) via the first suction port (22A) into a first air flow passing outward of the separation cylinder (14) and a second air flow passing inward of the separation cylinder (14),
wherein the separation cylinder (14) has an exit side end part (16) that turns the first air flow to a radially outward direction to guide the first air flow to the first air flow path (181) and turns the second air flow to a radially outward direction to guide the second air flow to the second air flow path (191).

10. The centrifugal blower unit (1A) according to claim 9,
wherein the motor (13) has a motor housing (133) in which a driving part that rotationally drives a shaft (12) of the motor (13) is accommodated, and
air holes (134a and 134b) are provided in an end part on one side in the axial direction and an end part on the other side in the axial direction of the motor housing (133), respectively, and
the cooling air supply port (131) is provided in an end part on the other side in the axial direction of the motor accommodation part (130).

11. The centrifugal blower unit (1A) according to claim 9 or 10,
wherein, when rotation of the first impeller wheel (5) and the second impeller wheel (6) causes the outside air (FE) and the vehicle cabin inside air (FR) of the vehicle to be sucked to the scroll housing (17), the separation cylinder (14) guides the outside air (FE) to the first air flow path (181) through an outside of the separation cylinder (14) and guides the vehicle cabin inside air (FR) to the second air flow path (191) through an inside of the separation cylinder (14), and
the cooling air intake port (40A) is provided in the second scroll (19).
